(19) Europäisches Patentamt / European Patent Office / Office européen des brevets

(11) **EP 3 750 777 B1**

(12) **EUROPEAN PATENT SPECIFICATION**

(45) Date of publication and mention
of the grant of the patent:
**25.10.2023 Bulletin 2023/43**

(21) Application number: **17918179.7**

(22) Date of filing: **15.12.2017**

(51) International Patent Classification (IPC):
**B61L 25/02** (2006.01)     **B60T 7/12** (2006.01)
**B60T 7/18** (2006.01)     **B60T 13/66** (2006.01)
**B60T 17/22** (2006.01)     **G01S 19/50** (2010.01)
**G01S 19/52** (2010.01)     G01S 19/14 (2010.01)

(52) Cooperative Patent Classification (CPC):
**B60T 13/665; B60T 7/128; B60T 7/18;
B60T 17/228; B61L 25/021; B61L 25/025;
G01S 19/50; G01S 19/52;** B61L 2205/04;
G01S 19/14

(86) International application number:
**PCT/CN2017/116382**

(87) International publication number:
**WO 2019/015241 (24.01.2019 Gazette 2019/04)**

(54) **METHOD FOR CONTROLLING PREVENTING VEHICLE OVERRUN AT TAIL END OF ROUTE AND VEHICLE-MOUNTED DEVICE FOR PREVENTING VEHICLE OVERRUN AT TAIL END OF ROUTE**

VERFAHREN ZUR STEUERUNG DER VERHINDERUNG VON UNVORSICHTIGEM BESCHLEUNIGEN AM HECK AUF EINER STRECKE UND FAHRZEUGMONTIERTE VORRICHTUNG ZUR VERHINDERUNG VON UNVORSICHTIGEM BESCHLEUNIGEN AM HECK AUF EINER STRECKE

PROCÉDÉ DE COMMANDE DE PRÉVENTION AVANCÉE DES COLLISIONS EN QUEUE D'ITINÉRAIRE ET DISPOSITIF EMBARQUÉ SUR VÉHICULE POUR LA PRÉVENTION AVANCÉE DES COLLISIONS EN QUEUE D'ITINÉRAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(30) Priority: **17.07.2017 CN 201710581895**

(43) Date of publication of application:
**16.12.2020 Bulletin 2020/51**

(73) Proprietor: **CRRC Zhuzhou Locomotive Co., Ltd. Zhuzhou, Hunan 412001 (CN)**

(72) Inventors:
• **YANG, Ying**
**Zhuzhou**
**Hunan province 412001 (CN)**
• **LUO, Xianguang**
**Zhuzhou**
**Hunan province 412001 (CN)**
• **DU, Qiumao**
**Zhuzhou**
**Hunan Province 412001 (CN)**
• **PENG, Dongliang**
**Zhuzhou**
**Hunan province 412001 (CN)**
• **HUANG, Zhong**
**Zhuzhou**
**Hunan province 412001 (CN)**
• **LI, Zhen**
**Zhuzhou**
**Hunan province 412001 (CN)**
• **LI, Jing**
**Zhuzhou**
**Hunan province 412001 (CN)**

EP 3 750 777 B1

(74) Representative: **Sharman, Thomas Alexander**
**Reddie & Grose LLP**
**The White Chapel Building**
**10 Whitechapel High Street**
**London E1 8QS (GB)**

(56) References cited:
**CN-A- 103 318 228      CN-A- 103 693 076**
**CN-A- 107 284 477      CN-U- 202 294 882**
**CN-U- 205 256 355      JP-A- 2002 067 960**
**US-A1- 2002 036 252    US-A1- 2004 138 814**
**US-A1- 2015 088 345**

## Description

The present application claims the priority to Chinese Patent Application No. 20170581895.6, titled "CONTROL METHOD FOR PREVENTING VEHICLE OVERRUN AT TAIL END OF ROUTE AND VEHICLE-MOUNTED DEVICE FOR PREVENTING VEHICLE OVERRUN AT TAIL END OF ROUTE", filed on July 17, 2017 with the National Intellectual Property Administration, PRC.

## FIELD

The present application relates to the technical field of vehicle positioning inspection, and in particular to a vehicle-mounted device for preventing vehicle overrun at a tail end of a route, and further relates a control method for preventing vehicle overrun at a tail end of a route.

## BACKGROUND

A rail transit vehicle needs to be debugged before running on an official route. At present, if a debugging personnel is not careful, it is easy to occur an accident that a debugged vehicle overruns a tail end of a route due to various factors such as: short mileages of debugging routes in various vehicle manufactures and vehicle maintenance bases, no ground signal system in the debugging routes and so many debugged vehicles. Once the vehicle is out of the route, the debugging operation of the entire route is influenced, and the vehicle may be seriously damaged, resulting in economic losses of millions of yuan.

At present, a vehicle positioning and a train protection technology have been maturely applied in rail transit routes, and the train positioning and protection technology based on a ground response technology has been widely used in China, and the technology needs many transponders on the ground, thus the investment is large, the maintenance cost is high and the vehicle-mounted device is complex, and therefore the technology is not suitable for positioning and protection of the debugging routes at a zero speed. There is an argent need for a system for preventing vehicle overrun at a tail end of a route with a low investment cost, convenient use and high positioning precision to satisfy the requirement of a test route.

In conclusion, a problem to be urgently addressed by those skilled in the art is how to effectively address the problem that a vehicle-mounted device for preventing vehicle overrun at the tail end of the route based on the ground transponder technology is difficult to satisfy the requirement of the test route.

US2015/0088345A1 discloses a system for determining a quality of a location estimation of a powered system at a location. The system includes a first sensor configured to measure a first parameter of the powered system at the location. The system further includes a second sensor configured to measure a second parameter of the powered system at the location. The system further includes a second controller configured to determine the location estimation of the powered system and the quality of the location estimation, based upon a first location of the powered system based on the first parameter, and a second location of the powered system based on the second parameter of the powered system. A method is also provided for determining a quality of a location estimation of a powered system at a location.

US2002/0036252A1 makes it possible to control a multiplicity of trains on an extensive railway systems using comparatively few complex means without it being necessary for there to be any knowledge of the route on the trains or any locating devices for the trains mounted along the route. For the trains to determine their own position, a satellite locating method is preferably used, which permits the travel location of a train, and thus its current stopping range, to be determined with sufficient precision. By determining such stopping ranges for the trains and by prescribing extensive route areas which apply for the trains, in each case in the form of polygons in a uniform coordinate system, it is possible reliably to detect any collisions of these polygons in order then to request in good time the assignment of current route areas or to start braking.

## SUMMARY

In view of this, a first object of the present application is to provide a vehicle-mounted device for preventing vehicle overrun at a tail end of a route, the structural design of the vehicle-mounted device for preventing vehicle overrun at the tail end of the route can effectively solve the problem that a vehicle-mounted device for preventing vehicle overrun at the tail end of a route based on the ground transponder technology is difficult to satisfy the requirement of a test route.

In order to achieve the above first object, following solutions are provided by the present application.

A vehicle-mounted device for preventing vehicle overrun at a tail end of a route includes:

a positioning module, which is configured to be connected to a satellite positioning system and is used for acquiring a satellite position of a vehicle;

a calibration module, which is used for carrying out positioning calibration for the satellite position according to an actual position of the vehicle when a speed of the vehicle is zero;

a speed acquisition module, which is used for acquiring a current speed of the vehicle in a real time and using the current speed as a computational speed;

a calculation module, which is used for calculating and obtaining a running distance of the vehicle based on the computational speed; calculating and obtaining a distance from a vehicle current position to the tail end based on the running distance and a positioning of a starting point of a scheduled route corresponding to the vehicle; and calculating and obtaining a braking distance corresponding to the current speed in terms of a preset acceleration value based on the computational speed;

a determination module, which is used for determining whether a difference value between the distance from the vehicle current position to the tail end and the braking distance is less than a preset safety margin; and

a braking output module, which is configured to be electrically connected to a braking system of the vehicle, and is used for sending a braking instruction to the braking system when the difference value between the distance from the vehicle current position to the tail end and the braking distance is less than the preset safety margin;

where the speed acquisition module includes:

a first speed acquisition unit, configured to be connected to an I/O interface of the vehicle to acquire a current acquisition speed of the vehicle;

a second speed acquisition unit, configured to be connected to the satellite positioning system to acquire a current positioning speed of the vehicle;

a computational speed determination unit, configured to use the current acquisition speed as the computational speed when the current acquisition speed is available, and use the current positioning speed as the computational speed when the current acquisition speed is not available.

Preferably, in the above vehicle-mounted device for preventing vehicle overrun at the tail end of the route, the calibration module includes:

an acquisition unit, which is used for acquiring an interval to which an actual position of the vehicle belongs, and to acquire a satellite position of the vehicle through the satellite positioning system;

a comparison unit, which is used for comparing an absolute value of the difference value between the sum of the distances from the satellite position to the satellite positioning coordinates at two ends of the interval and a preset distance, with a preset allowable deviation and determining whether the absolute value is less than the preset allowable deviation, if yes, the positioning calibration is completed, otherwise, the acquisition unit acquires the satellite position of the vehicle again through the satellite positioning system until the absolute value is less than the preset allowable deviation; where

the interval is divided into multiple intervals by sequentially calibrating satellite positioning coordinates on a scheduled route by a preset distance.

Preferably, in the above vehicle-mounted device for preventing vehicle overrun at the tail end of the route, a deviation alarm module is further included, which is used for outputting an alarm instruction when a difference value between the current acquisition speed and the current positioning speed is greater than a preset speed difference.

Preferably, in the above vehicle-mounted device for preventing vehicle overrun at the tail end of the route, a braking alarm module is further included, which is used for outputting an alarm instruction when a difference value between the distance from the vehicle current position to the tail end and the braking distance is less than the preset safety margin.

The vehicle-mounted device for preventing vehicle overrun at the tail end of the route according to the present application includes a positioning module which is connected to a satellite positioning system and is used for acquiring a satellite position of a vehicle; a calibration module which is used for carrying out positioning calibration for the satellite position according to an actual position of the vehicle when the speed of the vehicle is zero; a speed acquisition module which is used for acquiring a current speed of the vehicle in a real time and using the current speed as a computational speed; a calculation module which is used for calculating and obtaining a running distance of the vehicle based on the computational speed, and calculating and obtaining a distance from a vehicle current position to a tail end based on the running distance and a positioning of a starting point of a scheduled route corresponding to the vehicle, and calculating and obtaining the braking distance corresponding to the current speed by a preset acceleration value based on the computational speed; a determination module is used for determining whether a difference value between the distance from the vehicle current position to the tail end and the braking distance is less than a preset safety margin; and a braking output module which is electrically connected to a braking system of the vehicle, and is used for sending a braking instruction to the braking system when the difference value between the distance from the vehicle current position to the tail end and the braking distance is less than the preset safety margin.

According to the vehicle-mounted device for preventing vehicle overrun at the tail end of the route provided by the present application, the calibration module is used for positioning and calibrating the satellite position acquired by the positioning module and the actual position of the vehicle when the speed of the vehicle is zero; when the speed of the vehicle is greater than zero, the speed acquisition module acquires the current speed of the vehicle in a real time and uses the current speed as the computational speed, and the calculation module calculates and obtains the running distance of the vehicle based on the computational speed; a distance from a vehicle current position to a tail end is calculated and obtained based on the running distance and a positioning of a starting point of a scheduled route corresponding to the vehicle; and the braking distance corresponding to the current speed is calculated and obtained by a preset acceleration value based on the computational speed; the determination module is used for sending a braking instruction to the braking system when the difference value between the distance from the vehicle current position to the tail end and the braking distance is less than the preset safety margin, so that the vehicle is automatically and emergently braked. In summary, the vehicle-mounted device for preventing vehicle overrun at the tail end of the route according to the present application does not require a ground transponder, and it only needs to be mounted in a vehicle. The satellite positioning system acquires the satellite position of the vehicle through the positioning module, a train can be positioned through the satellite positioning signals at a zero speed, thereby ensuring the influence of the moving train on the positioning precision. The device has a high positioning precision, a simple structure, a convenient use, a small investment, a low maintenance cost and can satisfy the requirement of a test route.

In order to achieve the second object, a method for controlling preventing vehicle overrun at a tail end of a route is further provided according to the present application, which includes:

determining whether a speed of the vehicle is zero, if yes, acquiring the satellite position of the vehicle through the satellite positioning system, and performing the positioning calibration according to the actual position of the vehicle; otherwise, performing subsequent steps;

acquiring a current speed of the vehicle in a real time and using the current speed as a computational speed, and calculating and obtaining the running distance of the vehicle based on the computational speed;

calculating and obtaining a distance from a vehicle current position to the tail end based on the running distance and a positioning of a starting point of a scheduled route corresponding to the vehicle;

calculating and obtaining a braking distance corresponding to the current speed in terms of a preset acceleration value based on the computational speed;

sending a braking instruction to the braking system when the difference value between the distance from the vehicle current position to the tail end and the braking distance is less than the preset safety margin;

where the acquiring the current speed of the vehicle in real time and using the current speed as a computational speed includes:

acquiring a current acquisition speed of the vehicle through an I/O interface of the vehicle, and acquiring a current positioning speed of the vehicle through the satellite positioning system, determining whether the current acquisition speed is available, if yes, using the current acquisition speed as the computational speed, otherwise, using the current positioning speed as the computational speed.

Preferably, in the method for controlling preventing vehicle overrun at the tail end of the route, acquiring the satellite position of the vehicle through the satellite positioning system, and performing the positioning calibration with the actual position of the vehicle, which specifically includes:

acquiring the satellite position of the vehicle through the satellite positioning system; acquiring an interval to which the actual position of the vehicle belongs;

comparing an absolute value of the difference value between the sum of the distances from the satellite position to the satellite positioning coordinates at two ends of the interval and the preset distance with a preset allowable deviation and determining whether the absolute value is less than the preset allowable deviation, if yes, the positioning calibration are completed, otherwise, acquiring the satellite position of the vehicle again through the satellite positioning system until the absolute value is less than the preset allowable deviation; where

the interval is divided into multiple intervals by sequentially calibrating satellite positioning coordinates on a scheduled route by a preset distance.

Preferably, in the method for controlling preventing vehicle overrun at the tail end of the route, the method further includes:
outputting an alarm instruction when a difference value between the current acquisition speed and the current positioning speed is greater than the preset speed difference.

Preferably, in the method for controlling preventing vehicle overrun at the tail end of the route, when the difference value between the distance from the vehicle current position to the tail end and the braking distance is less than the preset safety margin, which further includes:

outputting an alarm instruction.

In the control method for preventing vehicle overrun at the tail end of the route according to the present application, the satellite positioning system acquires the satellite position of the vehicle. A train can be positioned through the satellite positioning signals at a zero speed, thereby ensuring the influence of the moving train on the positioning precision. The device has a high positioning precision, a simple structure, a convenient use, a small investment, a low maintenance cost and can satisfy the requirement of a test route.

## BRIEF DESCRIPTION OF THE DRAWINGS

To illustrate technical schemes according to the embodiments of the disclosure or in the conventional technology more clearly, the drawings to be used in the description of the conventional technology or the embodiments are described briefly hereinafter. Apparently, the drawings described hereinafter are only some embodiments of the present disclosure, and other drawings may be obtained by those skilled in the art based on those drawings without creative effort.

Figure 1 is a schematic structural diagram of a vehicle-mounted device for preventing vehicle overrun at a tail end of a route according to a specific embodiment of the present application.

Figure 2 is a schematic diagram of a calibration algorithm at a zero speed;

Figure 3 is schematic diagram of the principle of a method for controlling preventing vehicle overrun at a tail end of a route according to a specific embodiment of the present application.

Reference numbers in the drawings:

| 101 | positioning module, | 102 | calibration module, |
|-----|---------------------|-----|----------------------|
| 103 | speed acquisition module, | 104 | calculation module, |
| 105 | determination module, | 106 | braking output module |

## DETAILED DESCRIPTION OF EMBODIMENTS

The present application discloses a vehicle-mounted device for preventing vehicle overrun at a tail end of a route, so as to satisfy the requirement of a test route.

The technical solutions in the embodiments of the present application are clearly and completely described in the following with reference to the drawings in the embodiments of the present application, apparently, the described embodiments are only part of the embodiments of the present application rather than all embodiments. Based on the embodiments of the present application, all other embodiments obtained by those skilled in the art without creative efforts shall fall within the protection scope of the present application.

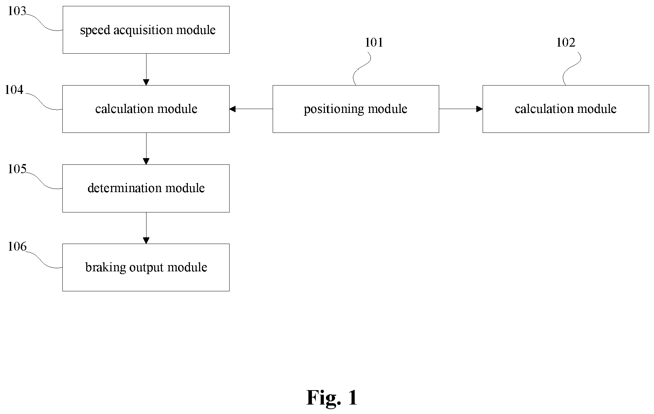

Referring to Figure 1, Figure 1 is a schematic structural diagram of a vehicle-mounted device for preventing vehicle overrun at a tail end of a route according to a specific embodiment of the present application.

In a specific embodiment, the vehicle-mounted device for preventing vehicle overrun at the tail end of the route according to a specific embodiment of the present application includes a positioning module, a calibration module, a speed acquisition module, a calculation module, a determination module and a braking output module.

The positioning module is connected to a satellite positioning system and is used for acquiring a satellite position. Specifically, the positioning module may be connected to the satellite positioning system through an antenna interface.

The calibration module is used for carrying out positioning calibration on the satellite position and an actual position of the vehicle when the speed of the vehicle is zero. The precision and the position of the satellite position of the current vehicle are calibrated when the speed of each vehicle is zero, and if the satellite position of the current vehicle deviates from an actual route of the vehicle is too large, the satellite position of the current vehicle is resampled and calculated to confirm the position of the vehicle on the route, until the satellite position is calibrated to meet the precision requirement, the satellite positioning state acquired in a real time is under differential positioning.

The speed acquisition module is used for acquiring a current speed of the vehicle in real time and using the current speed as a computational speed. By collecting the current speed of the vehicle to be used as the computational speed, a basis is provided for the subsequent calculation of a safety distance. The current speed of a specific vehicle can be acquired by collecting the speed of the vehicle in real time, and may also be acquired through the satellite positioning system.

The calculation module is used for calculating and obtaining a running distance of the vehicle based on the computational speed; calculating and obtaining a distance from a vehicle current position to a tail end based on the running distance and a positioning of a starting point of a scheduled route corresponding to the vehicle; and calculating and obtaining a braking distance corresponding to the current speed by a preset acceleration value based on the computational speed. That is, the braking distance corresponding to the current speed and the distance from the vehicle current position to the tail end can be obtained thought a primary algorithm and the computational speed and based on the positioning of the starting point of the scheduled route corresponding to the vehicle.

The determination module is used for determining whether a difference value between the distance from the vehicle current position to the tail end and the braking distance is less than a preset safety margin. The size of the specific preset safety margin may be set according to actual conditions and is not specifically limited herein.

The braking output module is electrically connected to a braking system of the vehicle, and is used for sending a braking instruction to the braking system when the difference value between the distance from the vehicle current position to the tail end and the braking distance is less than the preset safety margin. Therefore, the vehicle can be braked emergently, effectively preventing the vehicle from running off the tail end. Preferably, a braking instruction is sent to the braking system when the difference value between the distance from the vehicle current position to the tail end and the braking distance is less than the preset safety margin and the braking instruction is not detected. That is, when the braking distance is greater than or equal to the preset safety margin, if a driver does not give a braking instruction, the vehicle-mounted device for preventing vehicle overrun at the tail end of the route automatically outputs an emergency braking to ensure that the train does not run off the tail end of the route.

The vehicle-mounted device for preventing vehicle overrun at the tail end of the route is provided at a location of at least one of two driver's cabs at both ends of the train. For a train which can run in both directions, the vehicle-mounted device for preventing vehicle overrun at the tail end of the route is arranged in the driver's cabs at the two ends, and after the driver occupies the driver's cab, preferably, the vehicle-mounted device for preventing vehicle overrun at the tail end of the route in the driver's cab occupied by the driver is started, so as to convenient to calculate. If necessary, the vehicle-mounted device for preventing vehicle overrun at the tail end of the route which is not occupied in the driver's cab can also be used, if the length of the train needs to be considered in the calculation.

Preferably, the vehicle-mounted device for preventing vehicle overrun at the tail end of the route that is occupied in the driver's cab is a master device, and the vehicle-mounted device for preventing vehicle overrun at the tail end of the route that is not occupied in the driver's cab is a slave device. The occupancy is by default taken as a forward direction. When the train runs on the test route, the master and slave devices receive satellite positioning data and vehicle data, while calculating the position and the status of the vehicle. If the master device is running well during operation, the master device outputs a safety signal to the vehicle; if the master device fails, it automatically switches to the slave device, and the slave device is taken as a current safety signal output device. Therefore, the length of the safety distance must add the length of the vehicle in the safety running calculation, and the running direction is determined based on an occupancy signal.

For trains with only one running direction, the above safety protection principle is also applicable. It is only necessary to mount one set of the vehicle-mounted device for preventing vehicle overrun at the tail end of the route.

According to the vehicle-mounted device for preventing vehicle overrun at the tail end of the route provided by the present application, the calibration module is used for positioning and calibrating the satellite position acquired by the positioning module according to the actual position of the vehicle when the speed of the vehicle is zero; when the speed of the vehicle is greater than zero, the speed acquisition module acquires the current speed of the vehicle in a real time and uses the current speed as the computational speed, and the calculation module calculates and obtains the running distance of the vehicle based on the computational speed; a distance from a vehicle current position to a tail end is calculated and obtained based on the running distance and a positioning of a starting point of a scheduled route corresponding to the vehicle; and the braking distance corresponding to the current speed is calculated and obtained by a preset acceleration value based on the computational speed; the determination module is used for sending a braking instruction to the braking system when the difference value between the distance from the vehicle current position to the tail end and the braking distance is less than the preset safety margin, so that the vehicle is automatically and emergently braked. In summary, the vehicle-mounted device for preventing vehicle overrun at the tail end of the route according to the present application does not require a ground transponder, and it only needs to be mounted in a vehicle. The satellite positioning system acquires the satellite position of the vehicle through the positioning module, a train can be positioned through the satellite positioning signals at a zero speed, thereby ensuring the influence of the moving train on the positioning precision. The device has a high positioning precision, a simple structure, a convenient use, a small investment, a low maintenance cost and can satisfy the requirement of a test route.

Further, the calibration module includes:

an acquisition unit which is used for acquiring an interval to which an actual position of the vehicle belongs, and acquiring a satellite position of the vehicle through the satellite positioning system;

a comparison unit which is used for comparing an absolute value of the difference value between the sum of the distances from the satellite position to the satellite positioning coordinates at two ends of the interval and the preset distance with a preset allowable deviation, and determining whether the absolute value is less than the preset allowable deviation, if yes, the positioning calibration is completed, otherwise, the acquisition unit acquires the satellite position of the vehicle again through the satellite positioning system until the absolute value is less than the preset allowable deviation;

wherein the interval is divided into multiple intervals by sequentially calibrating satellite positioning coordinates on a scheduled route by a preset distance.

Specifically, for each experimental route, the vehicle-mounted device for preventing vehicle overrun at the tail end of the route collects data in field and solidifies the route data. A specific scheduled route can be stored in a storage module of the vehicle-mounted device for preventing vehicle overrun at the tail end of the route. The satellite positioning coordinates Ai are sequentially calibrated on a scheduled route by a preset distance, for example, the satellite positioning coordinate is calibrated every 10m on the scheduled route. Thus, a satellite positioning coordinate which has the preset distance from the tail end is A1, a satellite positioning coordinate which has two preset distances from the tail end is A2, and sequentially deduced to AN, thereby dividing the scheduled route into N+1 intervals. The length of the route is calculated through the satellite positioning data. Preferably, by comparing the calculated route length with the actual length, if a length error is greater than a preset error value, it needs to be recalibrated; if the calculated route length is consistent with the actual length, the route is divided into intervals based on the satellite positioning data.

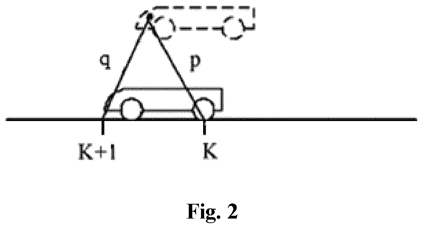

During calibration, as shown in Figure 2, Figure 2 is a schematic diagram of a calibration algorithm at a zero speed. The solid lines show an actual position of the vehicle, and the dotted lines show a satellite position of the vehicle. A satellite positioning function is $f(E_x, W_x, Z_x)$, when the speed of the vehicle is zero and the driver's cab of the vehicle is occupied, the system automatically initializes and calibrates. That is, the interval to which the actual position of the vehicle belongs is acquired, as shown in the figure, when the vehicle is located at an interval between a point K, that is, the Kth satellite positioning coordinate, and the point K+1, that is, the K+1 satellite positioning coordinate, a distance from the satellite position to the point K on the route is: $p = |f(E_{t0}, W_{t0}, Z_{t0}) - f(E_K, W_K, Z_{t0})|$, and a distance from the satellite position to the point K+1 on the route is: $q = |f(E_{t0}, W_{t0}, Z_{t0}) - f(E_{K+1}, W_{K+1}, Z_{K+1})|$, an absolute value of the difference value between the sum of the distances from the satellite position to the satellite positioning coordinates at two ends of the interval and the preset distance is: $|p + q - g|$.

$\varepsilon$ indicates a preset allowable deviation, if $|p + q - g| \le \varepsilon$, the positioning calibration is completed, otherwise, the acquisition unit acquires the satellite position of the vehicle again through the satellite positioning system until $|p + q - g| \le \varepsilon$.

The satellite positioning coordinates of the present application can take 10 meters as the interval, and the precision of the satellite positioning coordinates is smaller than that of a positioning interval based on a conventional ground fixed transponder. And precise positioning may allow the possible positioning deviation to be calibrated and determined on the route through a triangle calculation method, thereby eliminating the influence of the positioning deviation on the positioning calculation.

Preferably, the calibration module may further include a running calibration unit, which is used for performing positioning calibration on the satellite position and the actual position of the vehicle. The running calibration unit is mainly used for a long route (more than 5 km), in the running calculation process, a position of the current satellite position, an absolute displacement calculation value of the current running calculation and a calibration coordinate solidified in the software are compared at a regular time for determining a positioning error and calibrating the current position.

In the above embodiments, the speed acquisition module includes:

a first speed acquisition unit which is connected to an I/O interface of the vehicle to acquire a current acquisition speed of the vehicle;

a second speed acquisition unit which is connected to the satellite positioning system to acquire a current positioning speed of the vehicle;

a computational speed determination unit which is used for using the current acquisition speed as a computational speed when the current acquisition speed is available, otherwise, using the current positioning speed as the computational speed.

That is, there are two sources of speed, one is derived from a real-time acquisition speed of the vehicle, which is acquired from 4~12mA signals outputted by the analog quantity through the I/O interface of the vehicle; and the other one is derived from a satellite positioning speed. The vehicle-mounted device for preventing vehicle overrun at the tail end of the route uses the acquisition speed of the vehicle as the computational speed, and the GPS speed is an auxiliary determination speed. That is, through the computational speed determination unit, when the current acquisition speed is available, the current acquisition speed is used as a computational speed, otherwise, the current positioning speed is used as the computational speed. In the case that the vehicle implementation acquisition speed is invalid or the debugging process is not calibrated. In order to ensure the normal debugging of the vehicle, the satellite positioning speed signal can be selected as the computational speed, thereby ensuring that the preventing vehicle overrun system can be debugged under the condition that the real-time acquisition speed of the vehicle is not available.

The running speed of the vehicle adopts a dual-redundancy mode that is a real-time speed transmitted by the satellite positioning system and the real-time speed collected by the vehicle, and the vehicle acquisition speed is taken as the standard, and the GPS speed is redundant, so as to ensure a reliable running speed.

Further, a deviation alarm module is further included, which is used for outputting an alarm instruction when a difference value between the current acquisition speed and the current positioning speed is greater than the preset speed difference. That is, when the difference value between the current acquisition speed and the current positioning speed is exceeds the preset speed difference, the system will alarm, and the driver can confirm that the alarm disappears. The specific numerical value of the preset speed difference can be set according to needs, and is not specifically limited herein. An alarm instruction is output to remind the driver that a difference value between the current acquisition speed and the current positioning speed exceeds a safety range, thereby facilitating the driver to find the fault information in time and taking corresponding measures, and further improving the safety of the vehicle.

In the above embodiments, a braking alarm module is further included, which is used for outputting an alarm instruction when a difference value between the distance from the vehicle current position to the tail end and the braking distance is less than the preset safety margin. That is, when $|p + q - g| \leq \varepsilon$, a braking instruction is sent to the braking system so as to take emergency braking. And an alarm instruction is output to remind the driver to pay attention, further improving the safety.

In the above embodiments, algorithm determination of the calculation module can be as follows:

When the vehicle is debugged, the vehicle sends a speed signal every 128ms, and the acceleration data is determined through a front-back speed difference, the running distance of the vehicle is calculated through a basic distance algorithm, the distance from the vehicle to the tail end can be obtained through calculation of the positioning of the starting point and running distance.

The running distance can be calculated according to the following equation:

$$S_{t1} = \sum_{n=t0}^{n=t1} V_n \cdot t + \frac{1}{2} \sum_{n=t0}^{n=t1} a_n \cdot t^2$$

When the speed acquisition module receives the current speed of the vehicle every 128ms, t=128ms. It should be noted that acquiring the current speed of the vehicle at every preset time interval should also belong to the category of acquiring the current speed of the vehicle in real time.

The braking distance is calculated according to the emergency braking deceleration of 0.88m/s² in real time under the current running condition, and the safety distance can be calculated according the following equation:

$$S_{t2} = \frac{V_{t1}^2}{2 \cdot a_e}$$

wherein, $a_e$ indicates the braking deceleration.

The distance from the current position of the vehicle to the tail end is as follows:

$$S_{tm} = |f(E_{t1}, W_{t1}, Z_{t1}) - f(E_B, W_B, Z_B)| = b - S_{t1}$$

where, b indicates the distance from the starting point of the vehicle to the tail end.

Then, when $|S_{tm} - S_{t2}| \leq \sigma$, the braking output module sends a braking instruction to the braking system, wherein, $\sigma$ indicates the preset safety margin.

In conclusion, the running distance of the train is calculated through the integral of the positioning in the running process of the vehicle to the real-time speed and time of the train, and the positioning interval and the positioning point in the running are determined by compared with the coordinates of starting positioning points. A target distance of the train is calculated by the distance between the current position of the vehicle and the tail end through a positioning point at the ending point and a current positioning point. The emergency braking distance is calculated by the braking distance through a real-time speed of the current vehicle according to the margin of the emergency braking deceleration of 80%. When the target distance is larger than the emergency braking distance, then the train is safe, and when the target distance is smaller than or equal to the emergency braking distance, then the train carries out emergency braking.

The present application further discloses a method for controlling preventing vehicle overrun at a tail end of a route, the following steps are includes in the method.

S 1, whether the speed of the vehicle is zero is determined, if yes, the satellite position of the vehicle is acquired through the satellite positioning system, and the positioning calibration with the actual position of the vehicle is performed; otherwise, subsequent steps are performed.

S2, the current speed of the vehicle in a real time is acquired and the current speed is used as a computational speed, and the running distance of the vehicle is calculated and obtained based on the computational speed.

S3, a distance from a vehicle current position to a tail end is calculated and obtained based on the running distance and a positioning of a starting point of a scheduled route corresponding to the vehicle.

S4, a braking distance corresponding to the current speed in terms of a preset acceleration value is calculated and obtained based on the computational speed.

S5, a braking instruction is sent to the braking system when the difference value between the distance from the vehicle current position to the tail end and the braking distance is less than the preset safety margin.

Further, the satellite position of the vehicle is acquired through the satellite positioning system, and the positioning calibration with the actual position of the vehicle is performed in S 1, which specifically includes:

acquiring the satellite position of the vehicle through the satellite positioning system and acquiring an interval to which the actual position of the vehicle belongs;

comparing an absolute value of the difference value between the sum of the distances from the satellite position to the satellite positioning coordinates at two ends of the belonged interval and the preset distance to a preset allowable deviation and determining whether the absolute value is less than the preset allowable deviation, if yes, the positioning calibration is completed, otherwise, the satellite position of the vehicle is acquired again through the satellite positioning system until the absolute value is less than the preset allowable deviation; where,

the interval is divided into multiple intervals by sequentially calibrating satellite positioning coordinates on a scheduled route by a preset distance.

In the above embodiments, the current speed of the vehicle in a real time is acquired and the same is used as a computational speed in S2, which specifically includes:
acquiring a current acquisition speed of the vehicle through an I/O interface of the vehicle, and acquiring a current positioning speed of the vehicle through the satellite positioning system, whether the current acquisition speed is available is determined, if yes, the current acquisition speed is used as the computational speed, otherwise, the current positioning speed is used as the computational speed.

Further, the method is further included:
an alarm instruction is output when a difference value between the current acquisition speed and the current positioning speed is greater than the preset speed difference.

Furthermore, when the difference value between the distance from the vehicle current position to the tail end and the braking distance is less than the preset safety margin in S5, the method further includes:
an alarm instruction is output.

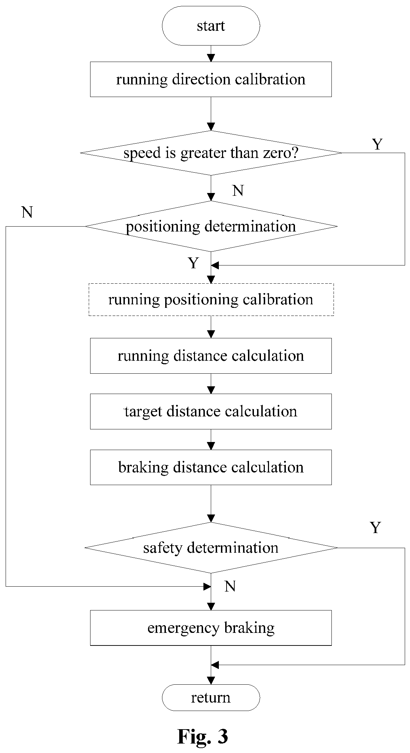

The specific relevant explanation in the method for controlling preventing vehicle overrun at the tail end of the route please refers to the relevant description of the above vehicle-mounted device for preventing vehicle overrun at the tail end of the route, and is not further described herein. The principle of the control method refers to Figure 3.

It should be noted that the vehicle-mounted device for preventing vehicle overrun at the tail end of the route and the method for controlling preventing vehicle overrun at the tail end of the route according to the present application are applicable not only to rail transit vehicles, but also to other collision prevention and preventing vehicle overrun applications of mobile devices or vehicles having a fixed route. The satellite position mentioned above includes both a GPS positioning technology and a Beidou positioning technology.

Various embodiments in the specification are described in a progressive manner, the content that each embodiment focuses on is different from other embodiments; the same or similar parts among the various embodiments can be referred to each other.

The above description of the disclosed embodiments enables those skilled in the art to realize or use the present application. Various modifications to these embodiments are apparent to those skilled in the art, the general principles defined herein may be implemented in other embodiments without departing from the scope of the invention as defined in the appended claims.

**Claims**

1. A vehicle-mounted device for preventing vehicle overrun at a tail end of a route, comprising:

   a positioning module (101), configured to be connected to a satellite positioning system and configured to acquire a satellite position of a vehicle;
   a calibration module (102), configured to carry out positioning calibration for the satellite position according to an actual position of the vehicle when the speed of the vehicle is zero;
   a speed acquisition module (103), configured to acquire a current speed of the vehicle in a real time and use the current speed as a computational speed;
   a calculation module (104), configured to calculate and obtain a running distance of the vehicle based on the computational speed; calculate and obtain a distance from a vehicle current position to the tail end based on the running distance and a positioning of a starting point of a scheduled route corresponding to the vehicle; and calculate and obtain a braking distance corresponding to the current speed in terms of a preset acceleration value based on the computational speed;
   a determination module (105), configured to determine whether a difference value between the distance from the vehicle current position to the tail end and the braking distance is less than a preset safety margin; and
   a braking output module (106), configured to be electrically connected to a braking system of the vehicle, and configured to output a braking instruction to the braking system when the difference value between the distance from the vehicle current position to the tail end and the braking distance is less than the preset safety margin;
   wherein the speed acquisition module comprises:

   a first speed acquisition unit, configured to be connected to an I/O interface of the vehicle to acquire a current acquisition speed of the vehicle;
   a second speed acquisition unit, configured to be connected to the satellite positioning system to acquire a current positioning speed of the vehicle; and
   a computational speed determination unit, configured to use the current acquisition speed as the computational speed when the current acquisition speed is available, and use the current positioning speed as the computational speed when the current acquisition speed is not available.

2. The vehicle-mounted device for preventing vehicle overrun at the tail end of the route according to claim 1, wherein the calibration module (102) comprises:

   an acquisition unit, configured to acquire an interval to which an actual position of the vehicle belongs, and to acquire the satellite position of the vehicle through the satellite positioning system;
   a comparison unit, configured to compare an absolute value of a difference value between the sum of the distances from the satellite position to the satellite positioning coordinates at two ends of the interval and the preset distance to a preset allowable deviation, and determine whether the absolute value is less than the preset allowable deviation, if yes, the positioning calibration is completed, otherwise, the acquisition unit acquires the satellite position of the vehicle again through the satellite positioning system until the absolute value is less than the preset allowable deviation;
   wherein, the interval is one of multiple intervals, which are formed by sequentially calibrating satellite positioning coordinates on a scheduled route according to a preset distance.

3. The vehicle-mounted device for preventing vehicle overrun at the tail end of the route according to claim 1, further comprising:
   a deviation alarm module, configured to output an alarm instruction when a difference value between the current acquisition speed and the current positioning speed is greater than a preset speed difference.

4. The vehicle-mounted device for preventing vehicle overrun at the tail end of the route according to claim 1 or 2, further comprising:

a braking alarm module, configured to output an alarm instruction when a difference value between the distance from the vehicle current position to the tail end and the braking distance is less than the preset safety margin.

5. A method for controlling preventing vehicle overrun at a tail end of a route, comprising:

determining whether a speed of the vehicle is zero, if yes, acquiring the satellite position of the vehicle through the satellite positioning system, and performing the positioning calibration according to the actual position of the vehicle; otherwise, performing subsequent steps;
acquiring the current speed of the vehicle in a real time and using the current speed as a computational speed, and calculating and obtaining a running distance of the vehicle based on the computational speed;
calculating and obtaining a distance from a vehicle current position to the tail end based on the running distance and a positioning of a starting point of a scheduled route corresponding to the vehicle;
calculating and obtaining a braking distance corresponding to the current speed in terms of a preset acceleration value based on the computational speed;
sending a braking instruction to the braking system when the difference value between the distance from the vehicle current position to the tail end and the braking distance is less than the preset safety margin;
wherein the acquiring the current speed of the vehicle in real time and using the current speed as a computational speed comprises:
acquiring a current acquisition speed of the vehicle through an I/O interface of the vehicle, and acquiring a current positioning speed of the vehicle through the satellite positioning system, determining whether the current acquisition speed is available, if yes, using the current acquisition speed as the computational speed, otherwise, using the current positioning speed as the computational speed.

6. The method for controlling preventing vehicle overrun at the tail end of the route according to claim 5, wherein, acquiring the satellite position of the vehicle through the satellite positioning system, and performing the positioning calibration according to the actual position of the vehicle, which comprise:

acquiring the satellite position of the vehicle through the satellite positioning system; acquiring an interval to which the actual position of the vehicle belongs;
comparing an absolute value of the difference value between the sum of the distances from the satellite position to the satellite positioning coordinates at two ends of the interval and the preset distance to a preset allowable deviation and determining whether the absolute value is less than the preset allowable deviation, if yes, the positioning calibration is completed, otherwise, acquiring the satellite position of the vehicle again through the satellite positioning system until the absolute value is less than the preset allowable deviation;
wherein, the interval is divided into multiple intervals by sequentially calibrating satellite positioning coordinates on a scheduled route by a preset distance.

7. The method for controlling preventing vehicle overrun at the tail end of the route according to claim 5, further comprising:
outputting an alarm instruction when a difference value between the current acquisition speed and the current positioning speed is greater than a preset speed difference.

8. The method for controlling preventing vehicle overrun at the tail end of the route according to claim 5 or 6, wherein, when the difference value between the distance from the vehicle current position to the tail end and the braking distance is less than the preset safety margin, which further comprises:
outputting an alarm instruction.

**Patentansprüche**

1. Fahrzeugmontierte Vorrichtung zum Verhindern, dass ein Fahrzeug über das hintere Ende einer Strecke hinausfährt, umfassend:

ein Positionsbestimmungsmodul (101), das zum Verbinden mit einem Satellitenpositionsbestimmungssystem konfiguriert ist und zum Erfassen einer Satellitenposition eines Fahrzeugs konfiguriert ist;
ein Kalibrierungsmodul (102), das konfiguriert ist zum Durchführen von Positionsbestimmungskalibrierung für die Satellitenposition gemäß einer tatsächlichen Position des Fahrzeugs, wenn die Geschwindigkeit des Fahrzeugs null ist;

ein Geschwindigkeitserfassungsmodul (103), das konfiguriert ist zum Erfassen einer aktuellen Geschwindigkeit des Fahrzeugs in Echtzeit und zum Verwenden der aktuellen Geschwindigkeit als eine Rechengeschwindigkeit; ein Berechnungsmodul (104), das konfiguriert ist zum Berechnen und Erhalten einer Fahrstrecke des Fahrzeugs auf der Grundlage der Rechengeschwindigkeit; Berechnen und Erhalten einer Entfernung von einer aktuellen Fahrzeugposition zum hinteren Ende auf der Grundlage der Fahrstrecke und einer Positionsbestimmung eines Startpunkts einer dem Fahrzeug entsprechenden geplanten Strecke; und Berechnen und Erhalten eines Bremswegs entsprechend der aktuellen Geschwindigkeit in Bezug auf einen voreingestellten Beschleunigungswert auf der Grundlage der Rechengeschwindigkeit;

ein Bestimmungsmodul (105), das konfiguriert ist zum Bestimmen, ob ein Differenzwert zwischen der Entfernung von der aktuellen Fahrzeugposition zum hinteren Ende und dem Bremsweg kleiner als eine voreingestellte Sicherheitsspanne ist; und

ein Bremsungsausgabemodul (106), das konfiguriert ist zum elektrischen Verbinden mit einem Bremssystem des Fahrzeugs und konfiguriert ist zum Ausgeben einer Bremsanweisung an das Bremssystem, wenn der Differenzwert zwischen der Entfernung von der aktuellen Fahrzeugposition zum hinteren Ende und dem Bremsweg kleiner als die voreingestellte Sicherheitsspanne ist;

wobei das Geschwindigkeitserfassungsmodul Folgendes umfasst:

eine erste Geschwindigkeitserfassungseinheit, die konfiguriert ist zum Verbinden mit einer E/A-Schnittstelle des Fahrzeugs zum Erfassen einer aktuellen Erfassungsgeschwindigkeit des Fahrzeugs;

eine zweite Geschwindigkeitserfassungseinheit, die konfiguriert ist zum Verbinden mit dem Satellitenpositionsbestimmungssystem zum Erfassen einer aktuellen Positionsbestimmungsgeschwindigkeit des Fahrzeugs; und

eine Rechengeschwindigkeitsbestimmungseinheit, die konfiguriert ist zum Verwenden der aktuellen Erfassungsgeschwindigkeit als die Rechengeschwindigkeit, wenn die aktuelle Erfassungsgeschwindigkeit verfügbar ist, und zum Verwenden der aktuellen Positionsbestimmungsgeschwindigkeit als die Rechengeschwindigkeit, wenn die aktuelle Erfassungsgeschwindigkeit nicht verfügbar ist.

2. Fahrzeugmontierte Vorrichtung zum Verhindern, dass ein Fahrzeug über das hintere Ende der Strecke hinausfährt, nach Anspruch 1, wobei das Kalibrierungsmodul (102) Folgendes umfasst:

eine Erfassungseinheit, die konfiguriert ist zum Erfassen eines Intervalls, zu dem eine tatsächliche Position des Fahrzeugs gehört, und zum Erfassen der Satellitenposition des Fahrzeugs durch das Satellitenpositionierungssystem;

eine Vergleichseinheit, die konfiguriert ist zum Vergleichen eines Absolutwerts eines Differenzwerts zwischen der Summe der Entfernungen von der Satellitenposition zu den Satellitenpositionsbestimmungskoordinaten an zwei Enden des Intervalls und der voreingestellten Entfernung mit einer voreingestellten zulässigen Abweichung und zum Bestimmen, ob der Absolutwert kleiner als die voreingestellte zulässige Abweichung ist, falls ja, wird die Positionsbestimmungskalibrierung abgeschlossen, ansonsten erfasst die Erfassungseinheit die Satellitenposition des Fahrzeugs erneut durch das Satellitenpositionsbestimmungssystem, bis der Absolutwert kleiner als die voreingestellte zulässige Abweichung ist;

wobei das Intervall eines von mehreren Intervallen ist, die durch sequenzielles Kalibrieren von Satellitenpositionsbestimmungskoordinaten auf einer planmäßigen Strecke gemäß einer voreingestellten Entfernung gebildet werden.

3. Fahrzeugmontierte Vorrichtung zum Verhindern, dass ein Fahrzeug über das hintere Ende der Strecke hinausfährt, nach Anspruch 1, ferner umfassend:
ein Abweichungsalarmmodul, das konfiguriert ist zum Ausgeben einer Alarmanweisung, wenn ein Differenzwert zwischen der aktuellen Erfassungsgeschwindigkeit und der aktuellen Positionsbestimmungsgeschwindigkeit größer als eine voreingestellte Geschwindigkeitsdifferenz ist.

4. Fahrzeugmontierte Vorrichtung zum Verhindern, dass ein Fahrzeug über das hintere Ende der Strecke hinausfährt, nach Anspruch 1 oder 2, ferner umfassend:
ein Bremsalarmmodul, das konfiguriert ist zum Ausgeben einer Alarmanweisung, wenn ein Differenzwert zwischen der Entfernung von der aktuellen Fahrzeugposition zum hinteren Ende und dem Bremsweg kleiner als die voreingestellte Sicherheitsspanne ist.

5. Verfahren zum Steuern des Verhinderns, dass ein Fahrzeug über das hintere Ende einer Strecke hinausfährt, umfassend:

Bestimmen, ob eine Geschwindigkeit des Fahrzeugs null ist, wenn ja, Erfassen der Satellitenposition des Fahrzeugs durch das Satellitenpositionierungssystem und Durchführen der Positionsbestimmungskalibrierung gemäß der tatsächlichen Position des Fahrzeugs; ansonsten Durchführen nachfolgender Schritte;

Erfassen der aktuellen Geschwindigkeit des Fahrzeugs in Echtzeit und Verwenden der aktuellen Geschwindigkeit als eine Rechengeschwindigkeit und Berechnen und Erhalten einer Fahrstrecke des Fahrzeugs auf der Grundlage der Rechengeschwindigkeit;

Berechnen und Erhalten einer Entfernung von einer aktuellen Fahrzeugposition zum hinteren Ende auf der Grundlage der Fahrstrecke und einer Positionsbestimmung eines Startpunkts einer dem Fahrzeug entsprechenden geplanten Strecke;

Berechnen und Erhalten eines Bremswegs entsprechend der aktuellen Geschwindigkeit in Bezug auf einen voreingestellten Beschleunigungswert auf der Grundlage der Rechengeschwindigkeit;

Senden einer Bremsanweisung an das Bremssystem, wenn der Differenzwert zwischen der Entfernung von der aktuellen Fahrzeugposition zum hinteren Ende und dem Bremsweg kleiner als die voreingestellte Sicherheitsspanne ist;

wobei das Erfassen der aktuellen Geschwindigkeit des Fahrzeugs in Echtzeit und das Verwenden der aktuellen Erfassungsgeschwindigkeit als eine Rechengeschwindigkeit Folgendes umfassen:

Erfassen einer aktuellen Erfassungsgeschwindigkeit des Fahrzeugs durch eine E/A-Schnittstelle des Fahrzeugs und Erfassen einer aktuellen Positionsbestimmungsgeschwindigkeit des Fahrzeugs durch das Satellitenpositionsbestimmungssystem, Bestimmen, ob die aktuelle Erfassungsgeschwindigkeit verfügbar ist, wenn ja, Verwenden der aktuellen Erfassungsgeschwindigkeit als die Rechengeschwindigkeit, ansonsten Verwenden der aktuellen Positionsbestimmungsgeschwindigkeit als die Rechengeschwindigkeit.

6. Verfahren zum Steuern des Verhinderns, dass ein Fahrzeug über das hintere Ende der Strecke hinausfährt, nach Anspruch 5, wobei Erfassen der Satellitenposition des Fahrzeugs durch das Satellitenpositionierungssystem und Durchführen der Positionsbestimmungskalibrierung gemäß der tatsächlichen Position des Fahrzeugs Folgendes umfassen:

Erfassen der Satellitenposition des Fahrzeugs durch das Satellitenpositionierungssystem; Erfassen eines Intervalls, zu dem die tatsächliche Position des Fahrzeugs gehört;

Vergleichen eines Absolutwerts des Differenzwerts zwischen der Summe der Entfernungen von der Satellitenposition zu den Satellitenpositionsbestimmungskoordinaten an zwei Enden des Intervalls und der voreingestellten Entfernung mit einer voreingestellten zulässigen Abweichung und zum Bestimmen, ob der Absolutwert kleiner als die voreingestellte zulässige Abweichung ist, falls ja, wird die Positionsbestimmungskalibrierung abgeschlossen, ansonsten Erfassen der Satellitenposition des Fahrzeugs erneut durch das Satellitenpositionsbestimmungssystem, bis der Absolutwert kleiner als die voreingestellte zulässige Abweichung ist;

wobei das Intervall durch sequenzielles Kalibrieren von Satellitenpositionsbestimmungskoordinaten auf einer planmäßigen Strecke um eine voreingestellte Entfernung in mehrere Intervalle unterteilt wird.

7. Verfahren zum Steuern des Verhinderns, dass ein Fahrzeug über das hintere Ende der Strecke hinausfährt, nach Anspruch 5, ferner umfassend:
Ausgeben einer Alarmanweisung, wenn ein Differenzwert zwischen der aktuellen Erfassungsgeschwindigkeit und der aktuellen Positionsbestimmungsgeschwindigkeit größer als eine voreingestellte Geschwindigkeitsdifferenz ist.

8. Verfahren zum Steuern des Verhinderns, dass ein Fahrzeug über das hintere Ende der Strecke hinausfährt, nach Anspruch 5 oder 6, wobei, wenn der Differenzwert zwischen der Entfernung von der aktuellen Fahrzeugposition zum hinteren Ende und dem Bremsweg kleiner als die voreingestellte Sicherheitsspanne ist, es ferner umfasst:
Ausgeben einer Alarmanweisung.

## Revendications

1. Dispositif monté sur véhicule de prévention d'un dépassement de véhicule en fin de parcours, comprenant :

un module de positionnement (101), configuré pour être connecté à un système de positionnement par satellites et configuré pour acquérir une position par satellite d'un véhicule ;
un module d'étalonnage (102), configuré pour effectuer un étalonnage de positionnement pour la position par satellite conformément à une position actuelle du véhicule lorsque la vitesse du véhicule est zéro ;
un module d'acquisition de vitesse (103), configuré pour acquérir une vitesse courante du véhicule en temps réel et utiliser la vitesse courante comme une vitesse calculatoire ;

un module de calcul (104), configuré pour calculer et obtenir une distance de roulement du véhicule sur la base de la vitesse calculatoire ; calculer et obtenir une distance d'une position courante du véhicule jusqu'à la fin sur la base de la distance de roulement et d'un positionnement d'un point de départ d'un parcours desservi correspondant au véhicule ; et calculer et obtenir une distance de freinage correspondant à la vitesse courante en termes d'une valeur d'accélération préréglée basée sur la vitesse calculatoire ;

un module de détermination (105), configuré pour déterminer si une valeur de différence entre la distance de la position courante du véhicule jusqu'à la fin et la distance de freinage est moins qu'une marge de sécurité préréglée ; et

un module de sortie de freinage (106), configuré pour être connecté électriquement à un système de freinage du véhicule, et configuré pour sortir une instruction de freinage au système de freinage lorsque la valeur de différence entre la distance de la position courante du véhicule jusqu'à la fin et la distance de freinage est moins que la marge de sécurité préréglée ;

dans lequel le module d'acquisition de vitesse comprend :

une première unité d'acquisition de vitesse, configurée pour être connectée à une interface d'entrée-sortie du véhicule afin d'acquérir une vitesse d'acquisition courante du véhicule ;

une deuxième unité d'acquisition de vitesse, configurée pour être connectée au système de positionnement par satellites afin d'acquérir une vitesse de positionnement courante du véhicule ; et

une unité de détermination de vitesse calculatoire, configurée pour utiliser la vitesse d'acquisition courante comme la vitesse calculatoire lorsque la vitesse d'acquisition courante est disponible, et utiliser la vitesse de positionnement courante comme la vitesse calculatoire lorsque la vitesse d'acquisition courante n'est pas disponible.

2. Dispositif monté sur véhicule de prévention d'un dépassement de véhicule en fin de parcours selon la revendication 1, dans lequel le module d'étalonnage (102) comprend :

une unité d'acquisition configurée pour acquérir un intervalle auquel une position actuelle du véhicule appartient, et acquérir la position par satellite du véhicule au moyen du système de positionnement par satellites ;

une unité de comparaison, configurée pour comparer une valeur absolue d'une valeur de différence entre la somme des distances de la position par satellite jusqu'aux coordonnées de positionnement par satellites aux deux extrémités de l'intervalle et de la distance préréglée jusqu'à une déviation admissible préréglée, et déterminer si la valeur absolue est moins que la déviation admissible préréglée, le cas échéant, l'étalonnage de positionnement est terminé, autrement, l'unité d'acquisition acquiert la position par satellite du véhicule de nouveau au moyen du système de positionnement par satellites jusqu'à ce que la valeur absolue soit moins que la déviation admissible préréglée ;

dans lequel, l'intervalle est l'un de multiples intervalles, qui sont formés en étalonnant séquentiellement des coordonnées de positionnement par satellites sur un parcours desservi conformément à une distance préréglée.

3. Dispositif monté sur véhicule de prévention d'un dépassement de véhicule en fin de parcours selon la revendication 1, comprenant en outre :
un module d'alarme de déviation, configuré pour sortir une instruction d'alarme lorsqu'une valeur de différence entre la vitesse d'acquisition courante et la vitesse de positionnement courante est plus grande qu'une différence de vitesse préréglée.

4. Dispositif monté sur véhicule de prévention d'un dépassement de véhicule en fin de parcours selon la revendication 1 ou 2, comprenant en outre :
un module d'alarme de freinage, configuré pour sortir une instruction d'alarme lorsqu'une valeur de différence entre la distance de la position courante du véhicule jusqu'à la fin et la distance de freinage est moins que la marge de sécurité préréglée.

5. Procédé de contrôle de prévention d'un dépassement de véhicule en fin de parcours, comprenant :

déterminer si une vitesse du véhicule est zéro, le cas échéant, acquérir la position par satellite du véhicule au moyen du système de positionnement par satellites, et effectuer l'étalonnage de positionnement conformément à la position actuelle du véhicule ; autrement, effectuer les étapes suivantes consistant à :
acquérir la vitesse courante du véhicule en temps réel et utiliser la vitesse courante comme un vitesse calculatoire, et calculer et obtenir une distance de roulement du véhicule sur la base de la vitesse calculatoire ;

calculer et obtenir une distance d'une position courante du véhicule jusqu'à la fin sur la base de la distance de roulement et d'un positionnement d'un point de départ d'un parcours desservi correspondant au véhicule ;

calculer et obtenir une distance de freinage correspondant à la vitesse courante en termes d'une valeur d'accélération préréglée basée sur la vitesse calculatoire ;

envoyer une instruction de freinage au système de freinage lorsque la valeur de différence entre la distance de la position courante du véhicule jusqu'à la fin et la distance de freinage est moins que la marge de sécurité préréglée ;

dans lequel acquérir la vitesse courante du véhicule en temps réel et utiliser la vitesse courante comme une vitesse calculatoire comprend :

acquérir une vitesse d'acquisition courante du véhicule au moyen d'une interface d'entrée-sortie du véhicule, et acquérir une vitesse de positionnement courante du véhicule au moyen du système de positionnement par satellites, déterminer si la vitesse d'acquisition courante est disponible, le cas échéant, utiliser la vitesse d'acquisition courante comme la vitesse calculatoire, autrement, utiliser la vitesse de positionnement courante comme la vitesse calculatoire.

6. Procédé de contrôle de prévention d'un dépassement de véhicule en fin de parcours selon la revendication 5, dans lequel, acquérir la position par satellite du véhicule au moyen du système de positionnement par satellites, et effectuer l'étalonnage de positionnement conformément à la position actuelle du véhicule, qui comprennent :

acquérir la position par satellite du véhicule au moyen du système de positionnement par satellites ;

acquérir un intervalle auquel la position actuelle du véhicule appartient ;

comparer une valeur absolue de la valeur de différence entre la somme des distances de la position par satellite jusqu'aux coordonnées de positionnement par satellites à deux extrémités de l'intervalle et de la distance préréglée jusqu'à une déviation admissible préréglée et déterminer si la valeur absolue est moins que la déviation admissible préréglée, le cas échéant, l'étalonnage de positionnement est terminé, autrement, acquérir la position par satellite du véhicule de nouveau au moyen du système de positionnement par satellites jusqu'à ce que la valeur absolue soit moins que la déviation admissible préréglée ;

dans lequel, l'intervalle est divisé en de multiples intervalles en étalonnant séquentiellement des coordonnées de positionnement sur un parcours desservi d'une distance préréglée.

7. Procédé de contrôle de prévention d'un dépassement de véhicule en fin de parcours selon la revendication 5, comprenant en outre :
sortir une instruction d'alarme lorsqu'une valeur de différence entre la vitesse d'acquisition courante et la vitesse de positionnement courante est plus grande qu'une différence de vitesse préréglée.

8. Procédé de contrôle de prévention d'un dépassement de véhicule en fin de parcours selon la revendication 5 ou 6, dans lequel la valeur de différence entre la distance de la position courante du véhicule jusqu'à la fin et la distance de freinage est moins que la marge de sécurité préréglée, qui comprend en outre :
sortir une instruction d'alarme.

103 ⟶ speed acquisition module

101 ⟶ positioning module

102 ⟶ calculation module

104 ⟶ calculation module

105 ⟶ determination module

106 ⟶ braking output module

**Fig. 1**

**Fig. 2**

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 20170581895
- US 20150088345 A1
- US 20020036252 A1